# EUROPEAN PATENT SPECIFICATION

(11) **EP 3 345 734 B1**
(45) Date of publication and mention of the grant of the patent: **20.01.2021**
(21) Application number: 16841729.3
(22) Date of filing: 26.08.2016
(51) Int. Cl.: B29B 15/10, B29K 105/08, B29K 101/12

(54) **METHODS FOR MANUFACTURING A REINFORCED FIBER SUBSTRATE, A SHAPING FABRIC AND A FIBER-REINFORCED PLASTIC STRUCTURE**
VERFAHREN ZUR HERSTELLUNG EINES VERSTÄRKTEN FASERSUBSTRATS, EINES FORMGEWEBES SOWIE EINE FASERVERSTÄRKTE KUNSTSTOFFSTRUKTUR
PROCÉDÉ DE FABRICATION D'UN SUBSTRAT DE FIBRE RENFORCÉ, D'UN TISSU DE MISE EN FORME ET D'UNE STRUCTURE DE PLASTIQUE RENFORCÉE PAR DES FIBRES

(30) Priority: 31.08.2015 JP 2015170034
(43) Date of publication of application: 11.07.2018
(73) Proprietor: Mitsubishi Chemical Corporation, Tokyo 100-8251 (JP)
(72) Inventor: TAKANO, Tsuneo, Tokyo 100-8251 (JP); HONMA, Takashi, Tokyo 100-8251 (JP)
(74) Representative: Hoffmann Eitle
(86) International application number: PCT/JP2016/075023
(87) International publication number: WO 2017/038697

(56) References cited:
- WO-A1-02/088231
- WO-A1-2012/066805
- WO-A1-2013/084552
- JP-A- 2005 213 469
- JP-A- 2009 235 182
- US-A1- 2009 246 468

## Description

### TECHNICAL FIELD

The present invention relates to a method for manufacturing a reinforced fiber substrate having a thermally fusible binder disposed under a predetermined condition, a method for manufacturing a shaping fabric using this reinforced fiber substrate, and a method for manufacturing a fiber-reinforced plastic structure using this shaping fabric.

### BACKGROUND ART

This shaping fabric is generally called a preform, and it is suitably used in a molding method called resin transfer molding (hereinafter referred to as "RTM") in which a structure of fiber-reinforced plastic (hereinafter referred to as FRP) is molded by impregnating the preform with a matrix resin. Hitherto, preforms have been widely used in various fields such as motor vehicles, aircrafts, and various kinds of sporting goods. As a method for manufacturing a FRP molded article, a so-called prepreg/autoclave molding method is general in which a preform having the shape of a molded article to be molded is formed in advance by using a prepreg and this is then cured in an autoclave set to predetermined temperature and pressure conditions. However, the RTM method has attracted attention and been gradually widely used in order to cut down the manufacturing cost in recent years.

In this RTM method, it is known to bond substrates to each other by providing a binder such as a thermoplastic resin material between the substrates to be laminated in order to maintain the preform in a predetermined shape, and for example, WO 2013/118534 A (Patent Literature 1) proposes to enhance the fixing strength at the peripheral portion of the preform by the binder as compared to other portions thereof for the purpose of achieving the quality of the molded article as well as maintaining the shape of the preform.

Here, Patent Literature 1 does not specifically disclose a method of adding a binder, but for example, JP 2013-249441 A (Patent Literature 2) describes that it is preferable to use a solid powder which can be sprayed on the surface of the reinforcing fiber in a dot, linear, or discontinuous linear shape at room temperature as a binder since the step of spraying is simple.

In addition to the above, US 2009/246468 A1 (Patent Literature 3) describes a process for making reactive polymer pre-pregs. Further, it describes that particles of reactive (polymerizable) thermoplastic or thermoset resin are fed from a hopper onto the first surface of a porous substrate and deposited.

JP 2005-213469 A (Patent Literature 4) desribes a process for making reinforced fiber base material made of cloth and resin material. Further, it describes a method for producing a reinforcing fiber substrate comprising the following steps.
(1) measuring resin particles with an embossing roll and a doctor blade,
(2) dropping the measured resin particles by its own weight,
(3) uniformly dispersing the resin particles falling under its own weight through the vibration net, and
(4) applying the uniformly dispersed resin particles to one surface of the fabric through masking.

### CITATION LIST

### PATENT LITERATURE

Patent Literature 1: WO 2013/118534 A
Patent Literature 2: JP 2013-249441 A
Patent Literature 3: US 2009/246468 A1
Patent Literature 4: JP 2005-213469 A

### SUMMARY OF THE INVENTION

### PROBLEM TO BE SOLVED BY THE INVENTION

Incidentally, a required interval is inevitably present between the spraying port of the nozzle or spray and the surface to be sprayed of the reinforced fiber substrate when a powdery binder is sprayed in a dot or linear shape.

Hence, even though it is attempted to evenly spray the powdery binder on the surface to be sprayed of the reinforced fiber substrate in a dot or linear shape by this conventional spraying means, the binder is likely to spread from the spraying port of the nozzle or spray toward the surface to be sprayed of the reinforced fiber substrate to scatter and this scattering is remarkable in some cases depending on the environment of work.

This binder functions as a bonding portion between these substrates at the time of formation of a preform, but a large film layer is unexpectedly formed between the substrates in some cases when the binder spreads to scatter on the reinforced fiber substrate, and in this case, the flow of the matrix resin in the thickness direction of the reinforced fiber substrate laminate is inhibited at the time of RTM and the quality of the molded product to be obtained is impaired in some cases.

In addition, it is difficult to avoid scattering of the binder to things other than the surface to be sprayed when spraying the binder and the surrounding environment of work at the time of addition of the binder tends to deteriorate, and when the spraying speed of the binder is lowered to suppress this scattering, the productivity of the preform tends to be impaired.

The invention has been made to solve these problems, and a specific object thereof is to provide a method for manufacturing a reinforced fiber substrate which imparts excellent shape retaining property and property to be impregnated with a matrix resin to a shaping fabric and exhibits excellent productivity, a method for manufacturing a shaping fabric using the reinforced fiber substrate, and a method for manufacturing a fiber-reinforced plastic structure.

### MEANS FOR SOLVING PROBLEM

In other words, the gist of the invention is as follows.
(1) A method for manufacturing a reinforced fiber substrate having a thermally fusible binder disposed on a surface thereof in a predetermined pattern, the method including:
   a step of disposing a binder permeable sheet via a frame body on a reinforced fiber substrate;
   wherein the binder permeable sheet is a mesh fabric woven by using a monofilament or spun yarn made of a synthetic resin;
   wherein the binder permeable sheet has a permeable pattern of binder permeable holes in a dot shape;
   wherein the permeable pattern is formed by coating a coating agent on the entire surface of the mesh fabric and removing a part of the coating agent to form the binder permeable holes; and
   wherein the frame body is composed of frame members; and
   a step of coating a powdery binder on the surface of the reinforced fiber substrate by placing the powder binder as one lump in a partial region of the binder permeable sheet in the vicinity of a first frame member of the frame body, and the moving a spatula along the frame body while pressing the spatula against the binder permeable sheet so as to permeate the powdery binder through the permeable pattern.
(2) The method for manufacturing a reinforced fiber substrate according to (1), further including a step of fusing the coated powdery binder onto a reinforced fiber substrate.
(3) The method for manufacturing a reinforced fiber substrate according to (1) or (2), wherein a sieve diameter of the thermally fusible binder of the dot shape to be 300 times or more the average diameter of the reinforcing fibers and 3000 times or less the average diameter of the reinforcing fibers.
(4) The method for manufacturing a reinforced fiber substrate according to any one of (1) to (3), in which the same patterns of a thermally fusible binder is repeatedly disposed on the reinforced fiber substrate by continuously using the binder permeable sheet.
(5) The method for manufacturing a reinforced fiber substrate according to (1) to (4), wherein an amount of a binder coated is controlled by the pressing force.
(6) A method for manufacturing a shaping fabric, the method including:
   the method for manufacturing a reinforced fiber substrate according to (1) to (5);
   a step of laminating a plurality of reinforced fiber substrates obtained by the manufacturing method according to any one of (1) to (5) such that binder-disposed surfaces of the reinforced fiber substrates face the same surface; and
   a step of shaping each reinforced fiber substrate and at the same time fusing a binder by sandwiching a plurality of laminated reinforced fiber substrates between two or more shaping molds and heating and pressurizing the laminated and sandwiched reinforced fiber substrates.
(7) A method for manufacturing a fiber-reinforced plastic structure including the method for manufacturing a shaping fabric according to (6), and which a matrix resin is impregnated into and cured in the shaping fabric.

### EFFECT OF THE INVENTION

The invention has the basic configuration described above, and it is thus possible to manufacture a reinforced fiber substrate which imparts excellent shape retaining property and property to be impregnated with a matrix resin to a shaping fabric and exhibits excellent productivity and a method for manufacturing the same, to accurately coat a determined amount of a powdery binder on a reinforced fiber substrate in a dot shape in a predetermined pattern by simple operation using a simple auxiliary tool without being affected by the surrounding environment, and also to avoid deterioration of the surrounding environment of work due to scattering of the powder.

### BRIEF DESCRIPTION OF DRAWINGS

Fig. 1 is an explanatory view of a production example of a reinforced fiber substrate of the invention, which illustrates an example of coating operation of a powdery binder on a reinforced fiber substrate to be used in a RTM method;
Fig. 2 is a cross-sectional view on arrow of the reinforced fiber substrate after coating of the powdery binder taken along the line II - II in Fig. 1;
Fig. 3 is a perspective view obliquely seen from below, which illustrates an example of coating operation of a powdery binder on a reinforced fiber substrate cut along a paper pattern;
Fig. 4 is an explanatory view which illustrates multistage coating of binder on a reinforced fiber substrate having an area larger than a pattern of a binder permeable sheet;
Fig. 5 is a plan view which schematically illustrates an enlarged part of a reinforced fiber substrate coated with a powdery binder in a dot shape; and
Fig. 6 is a process explanatory view which illustrates an example of a process of forming a shaping fabric.

### MODE(S) FOR CARRYING OUT THE INVENTION

Examples of the reinforcing fiber constituting the reinforced fiber substrate may include a carbon fiber, a glass fiber, a tyranno fiber, an aramid fiber, a silicon nitride fiber, a high-strength polyester fiber, a boron fiber, an alumina fiber, a nylon fiber, and a mineral fiber. Among these, a carbon fiber is preferable since it exhibits excellent specific strength and specific elasticity. In the case of using a carbon fiber as the reinforcing fiber, those having an average diameter (single fiber) of, for example, about from 3 to 20 µm can be used.

In addition, the reinforced fiber substrate is constituted by a fabric, such as a woven fabric, a knitted fabric, a non-crimp fabric, or a nonwoven fabric, containing the reinforcing fiber described above.

A thermally fusible binder having a predetermined shape set according to the shape of the intended shaping fabric is disposed on the surface of the reinforced fiber substrate.

This thermally fusible binder is a resin which is solid at normal temperature, and it can be selected from a thermosetting resin or a thermoplastic resin and used.

Examples of the thermosetting resin may include an unsaturated polyester resin, an epoxy resin, a vinyl ester resin, a phenol resin, an epoxy acrylate resin, a urethane acrylate resin, a phenoxy resin, an alkyd resin, a urethane resin, a maleimide resin, and a cyanate resin.

Examples of the thermoplastic resin may include a polyolefin resin, an acrylic resin, a polyamide resin, a polyester resin, a polyphenylene sulfide resin, a polyether ketone resin, a polyether sulfone resin, and an aromatic polyamide resin.

One or more kinds of the resins described above can be appropriately selected and used in consideration of compatibility with the matrix resin to be used in RTM and the like.

This thermally fusible binder has a function of thermally fusing the laminated reinforced fiber substrates by being heated at the time of manufacture of the shaping fabric described above and of maintaining the shape of this shaping fabric until this shaping fabric is subjected to RTM.

For example, this thermally fusible binder may be in a state in which an aggregate of a powder is disposed on a substrate in a predetermined shape, but it is preferable that the thermally fusible binder is bonded on the reinforced fiber substrate in a state of being integrated into a predetermined shape since excellent shape stability of the thermally fusible binder, excellent workability at the time of lamination of the reinforced fiber substrates, and the like are exhibited. As described above, in a case in which the thermally fusible binder of a powder is disposed on the substrate, the thermally fusible binder of a powder can be melted and integrated by being heated in this state and this can be fixed on the substrate.

The thickness of the thermally fusible binder for the purposes of the invention is preferably 300 times or less the average diameter of the reinforcing fibers since it is possible to decrease the irregularities on the surface of the intended shaping fabric.

Meanwhile, the thickness of the thermally fusible binder for the purposes of the invention is preferably 600 µm or less and more preferably 300 µm or less in the case of taking the workability when coating the binder on the reinforced fiber substrate and the productivity of the reinforced fiber substrate into consideration.

In the reinforced fiber substrate in which a thermally fusible binder is disposed on the surface of the invention, it is required that the sum of areas of the thermally fusible binders having a projected area equivalent circle diameter to be less than 300 times the average diameter of the reinforcing fibers constituting this reinforced fiber substrate is 10% or less with respect to the total area of the thermally fusible binders disposed on the surface.

This is because a large number of unexpected fine binder regions formed by the scattered binders at the time of coating of the binder is formed in the vicinity of the intended binder as well as the shape retaining property of the shaping fabric tends to be impaired when this sum of areas exceeds 10% of the total area of the thermally fusible binders, and there is thus a tendency that the interlayer flow path for the RTM resin is blocked and the impregnating ability of the matrix resin into the shaping fabric decreases at the time of manufacture of the fiber-reinforced plastic structure by RTM. The sum of areas is preferably 8% or less and more preferably 5% or less of the total area of the thermally fusible binders.

In addition, in the reinforced fiber substrate, it is possible to maintain the shape retaining property of the shaping fabric and the impregnating ability of the matrix resin into the fiber-reinforced plastic structure without impairing the productivity of the reinforced fiber substrate by setting the sum of areas to be 1% or more of the total area of the thermally fusible binders. The sum of areas is more preferably 2% or more and still more preferably 3% or more of the total area of the thermally fusible binders.

Here, the projected area equivalent circle diameter is the diameter of the equivalent circle known as the Heywood diameter, and in the invention, it means the diameter of a circle having an area equal to the projected area on the surface of the reinforced fiber substrate in the individual thermally fusible binders disposed on the surface of the reinforced fiber substrate.

In the reinforced fiber substrate, the ratio of the total area of the thermally fusible binders to the area of this reinforced fiber substrate is preferably in a range of from 5% to 70%.

This is because the binder peeling strength between the reinforced fiber substrates constituting the shaping fabric is at a sufficient level and the shape retaining property of the shaping fabric tends to be favorable by setting this ratio to 5% or more. The ratio is preferably 10% or more and more preferably 20% or more. In addition, this is because there is a tendency that failure in impregnation of the intended fiber-reinforced plastic structure with the matrix resin due to blocking of the flow path for the matrix resin between the reinforced fiber substrates hardly occurs when conducting RTM using the shaping fabric by setting this ratio to 70% or less. This ratio is preferably 60% or less and more preferably 50% or less.

In the reinforced fiber substrate, it is preferable that a thermally fusible binder having a sieve diameter to be 3000 times or less the average diameter of the reinforcing fibers is disposed. This is because there is a tendency that failure in impregnation of the intended fiber-reinforced plastic structure with the matrix resin due to blocking of the flow path for the matrix resin between the reinforced fiber substrates hardly occurs when conducting RTM using the shaping fabric by setting the sieve diameter to be 3000 times or less the average diameter of the reinforcing fibers. The sieve diameter is preferably 2500 times or less and more preferably 2000 times or less the average diameter of the reinforcing fibers.

In addition, in the reinforced fiber substrate, it is preferable that the sieve diameter of the thermally fusible binder to be disposed on the substrate as the binder is 300 times or more the average diameter of the reinforcing fibers since the shape retaining property of the shaping fabric tends to be excellent. The sieve diameter is more preferably 500 times or more and still more preferably 800 times or more the average diameter of the reinforcing fibers.

Here, the sieve diameter in the invention means the minimum value of the opening through which the solid substance can pass through in a case in which a solid substance having the same shape as the individual thermally fusible binders disposed on the surface of the reinforced fiber substrate is sieved through a sieve having a perfect circular opening.

The shape of the thermally fusible binder to be disposed for the purpose of being this binder is a dot shape.

In the reinforced fiber substrate, it is possible to appropriately select the shape and disposed position of the thermally fusible binder described above in consideration of the shape of the shaping fabric and further to achieve both high accuracy and shorter time in disposition of the binder by repeatedly disposing substantially the same aggregate patterns on the surface of the reinforced fiber substrate.

In addition, it is possible to dispose substantially the same aggregate patterns of the thermally fusible binder in each layer in the shaping fabric in which this reinforced fiber substrate is laminated, and the quality thereof is thus stabilized. Consequently, it is possible to manufacture a fiber-reinforced plastic structure with decreased variations in physical properties by using this shaping fabric.

Subject to the appended claims, the reinforced fiber substrate described above can be manufactured, for example, by carrying out the following steps.
a step of disposing a binder permeable sheet having a permeable pattern formed by a binder permeable hole and a required thickness on a reinforced fiber substrate;
a step of disposing a powdery binder on the surface of the binder permeable sheet,
a step of storing the powdery binder in the binder permeable hole;
a step of relatively separating the binder permeable sheet from the surface coated with the binder of the reinforced fiber substrate; and
a step of transferring the powdery binder stored in the permeable hole to the surface coated with the binder of the reinforced fiber substrate at the time of this separation.

By adopting the steps described above, it is possible to improve the coating speed while suppressing scattering of the binder as well as to suppress ununiform coating of the powder binder on the substrate.

In addition, by adopting the steps described above, it is possible to accurately reproduce the shape and dimensions of the powder binder as designed as well as to appropriately change the density of the binder permeable holes disposed in the pattern to be formed on the binder permeable sheet, and it is thus possible to adjust the density of the binder coated by taking the shape of the shaping fabric to be shaped and the impregnating ability of the matrix resin at the time of RTM into consideration.

In addition to the steps described above, it is also possible to adopt a step of fusing the transferred powdery binder onto the reinforced fiber substrate, and this makes it possible to improve the shape stability of the thermally fusible binder disposed on the reinforced fiber substrate to be manufactured, the workability when laminating the reinforced fiber substrate at the time of molding of the shaping fabric, and the like.

As the powdery binder to be used in the step described above, those that are solid at normal temperature and exhibit thermal fusibility by heating can be used, and the powdery binder can be appropriately selected from the thermosetting resins or thermoplastic resins described above.

In addition, the average particle diameter of this powdery binder is preferably in a range of from 10 to 300 µm. This is because scattering of the binder at the time of coating of the binder tends to be suppressed by setting the average particle diameter to 10 µm or more. The average particle diameter is more preferably 30 µm or more and still more preferably 50 µm or more. This is also because the adhesive property between the binder and the reinforced fiber substrate tends to be favorable by setting the average particle diameter to 300 µm or less. The average particle diameter is more preferably 250 µm or less and still more preferably 200 µm or less.

In the binder permeable sheet to be used in the step described above, a permeable pattern formed by a binder permeable hole in a dot shape is selected in consideration of the shape of the shaping fabric.

In addition, it is possible to repeatedly dispose substantially the same aggregate patterns of the binder on the substrate by continuously using the binder permeable sheet having such a predetermined permeable pattern, and this makes it possible to achieve both high accuracy and shorter time in disposition of the binder.

The material for this binder permeable sheet is a mesh fabric woven by using a monofilament or spun yarn made of a synthetic resin from the viewpoint of excellent followability to a reinforced fiber substrate having irregularities on the surface.

Here, the size of the eye of mesh in the case of using the mesh fabric is not particularly limited, but it is preferably set to be in a range of from 100 to 1000 µm from the viewpoint of the permeability of the powdery binder to the mesh.

In addition, the thickness of the binder permeable sheet is not particularly limited, but it is preferably set to be in a range of from 30 to 300 µm from the viewpoint of followability to the reinforced fiber substrate and durability.

In addition, in the step of storing the powdery binder in the binder permeable hole described above, the film formation by the powdery binder in the nonporous region can be suppressed and the flow of the matrix resin in the thickness direction of the substrate at the time of RTM tends to be smooth, for example, by controlling the amount of the binder coated per one dot shape by adjusting the pressing force applied to the binder permeable sheet by using a spatula.

Furthermore, it is possible to precisely control the bonding strength of the binder to the reinforced fiber substrate and to locally enhance this bonding strength, for example, by controlling the amount of the binder coated per one dot shape by changing the aperture ratio of the binder permeable sheet at a specific location, and it is thus possible to impart sufficient shape retaining force even to a shaping fabric having a complicated shape.

The shaping fabric described above can be manufactured by preparing a plurality of the reinforced fiber substrates of the invention manufactured by the steps described above, laminating these such that the binder-disposed surfaces of the reinforced fiber substrates face the same surface, and shaping each reinforced fiber substrate and at the same time fusing the binder present between the reinforced fiber substrates by sandwiching a plurality of these laminated reinforced fiber substrates between two or more shaping molds and heating and pressurizing the laminated and sandwiched reinforced fiber substrates.

The conditions for this heating and pressurization can be appropriately selected depending on the shape of the shaping fabric, the kind of the binder, and the like.

A fiber-reinforced plastic structure can be manufactured by impregnating into and curing a matrix resin in the shaping fabric manufactured by the invention by utilizing RTM.

The conditions for this RTM and the kind of the matrix resin can be appropriately selected depending on the shape and application of the fiber-reinforced plastic structure.

Hereinafter, and subject to the appended claims, representative embodiments of the method for manufacturing a reinforced fiber substrate, and the method of forming a shaping fabric in accordance with the invention will be described with reference to the drawings. In the present embodiment, an example of forming a preform to be used at the time of RTM as the shaping fabric will be described.

In RTM, one in which a thermally fusible binder is disposed on the surface of a fabric, such as a woven fabric, a knitted fabric, a non-crimp fabric, or a nonwoven fabric, composed of the reinforcing fiber described above is used as a reinforced fiber substrate of FRP, a plurality of these reinforced fiber substrates are laminated to form a laminate, this laminate is placed on a lower mold of a preform forming mold, the upper mold is lowered, and the laminate is heated and pressurized to form a preform (shaping fabric) having a predetermined shape. At this time, in the present embodiment, a powdery binder which is made of a thermoplastic resin and melts and locally joins the fibers to each other as the molding die is heated and pressurized is previously coated on the surface of the reinforced fiber substrate in a dot shape and then heated to be disposed as a film-shaped binder in order to retain the shape of the preform. It is also possible to constitute a part of the preform forming mold by a bag film and to evacuate the interior of the mold. It is possible to form a preform in which the flow path for the matrix resin in the thickness direction of the reinforced fiber substrate laminate is secured at the time of RTM even when the binder coated in a dot shape is heated and melted to locally join the fibers to each other.

Subsequently, the preform is transferred to a FRP molding die, clamped, the resin is then impregnated into the laminate of the reinforced fiber substrates by injecting the matrix resin in the direction along the laminated surface from the end portion of the preform or in the direction perpendicular to the laminated surface while decreasing the internal pressure of the mold if necessary, and then the resin is cured or solidified to form FRP. Molding in which a matrix resin is impregnated into the preform by constituting a part of the molding die by a bag film and evacuating the interior of the mold is also possible.

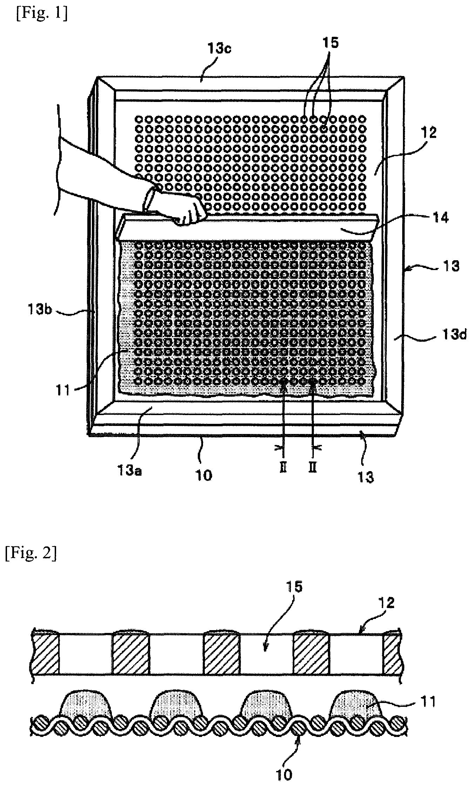

Fig. 1 illustrates a manner of coating a powdery binder 11 on the surface of a reinforced fiber substrate 10 in a dot shape, which is a part of the specific method of forming a preform according to the present embodiment. In this step of coating the powdery binder 11, one binder permeable sheet 12, a frame body 13 which is composed of first to fourth four frame members 13a to 13d and bonds and fixes the binder permeable sheet 12 in a tension state, and one rectangular plate-shaped spatula 14 are used. As the binder permeable sheet 12, a mesh fabric woven by using a monofilament or spun yarn made of a synthetic resin such as nylon or tetron, a stainless steel wire, or the like is used, but a porous synthetic resin plate or a metal plate may be used in some cases.

In order to fabricate the binder permeable sheet 12 from the mesh fabric, a coating agent is coated on the entire surface of the mesh fabric excluding the dot-shaped binder permeable hole 15 forming part to be formed along a desired pattern to close the aperture of the mesh, and a part of the coating agent is removed to form the aperture (eye) of the mesh. The powdery binder permeates through the eye of the mesh part from which the coating agent has been removed. In the case of a synthetic resin plate or a metal plate, a large number of positions at which the binder permeable holes 15 are disposed are drilled along a desired pattern. As the material for the spatula 14, any one of rubber, wooden, or a metal is selected, but a flat plate having a rectangular shape is generally used as the shape.

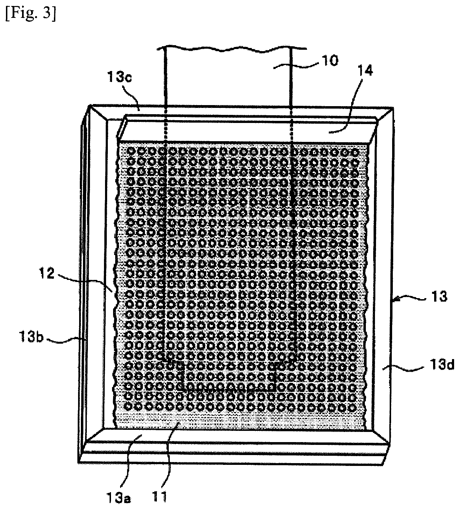

In order to coat the powdery binder 11 on the surface of the reinforced fiber substrate 10 in a dot shape by using these devices, the binder permeable sheet 12 is placed on the surface to be coated with the binder of the reinforced fiber substrate 10 via the frame body 13, then a predetermined amount of the powdery binder 11 is raised up and placed as one lump in a partial region of the surface coated with the binder of the binder permeable sheet 12 in the vicinity of the first frame member 13a of the frame body 13, and the spatula 14 is moved along the frame body 13 while pressing the spatula 14 against the binder permeable sheet 12. Examples of the binder 11 may include a thermofluid powder and a thermoplastic resin powder such as an epoxy resin, a polyamide resin, and a polyester resin. As illustrated in Fig. 3, the powdery binder 11 is filled in all the binder permeable holes 15 of the binder permeable sheet 12 while being spread by the spatula 14 by this movement of the spatula 14. At this time, the powdery binder 11 which has not been filled in the binder permeable hole 15 is driven away from the binder permeable sheet 12 to the third frame member 13c on the side opposite to the first frame member 13a as the spatula 14 moves, and it gathers in a partial region in the vicinity of the third frame member 13c while wiping off the binder 11 remaining on the binder permeable sheet 12.

Next, the frame body 13 is moved to a region which is not coated with the binder of the reinforced fiber substrate 10 and the spatula 14 is moved toward the first frame member 13a in the same manner as described above by reversing the pressing direction of the spatula 14 to accumulate the powdery binder 11 accumulated in the vicinity of the third frame member 13c again in the vicinity of the first frame member 13a. The upper surface of the powdery binder 11 filled in the binder permeable hole 15 is formed into a uniform surface, and the binder permeable sheet 12 is then lifted up together with the frame body 13 and separated from the surface coated with the binder of the reinforced fiber substrate 10. At the time of this separation, the powdery binder 11 filled in the binder permeable hole 15 transfers to the surface coated with the binder of the reinforced fiber substrate 10 by its own weight. Fig. 2 schematically illustrates the shape of the binder 11 on the reinforced fiber substrate 10 and the structure of the binder permeable sheet 12 at the time of this transfer.

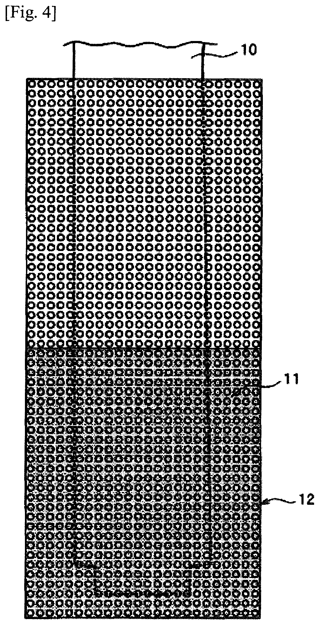

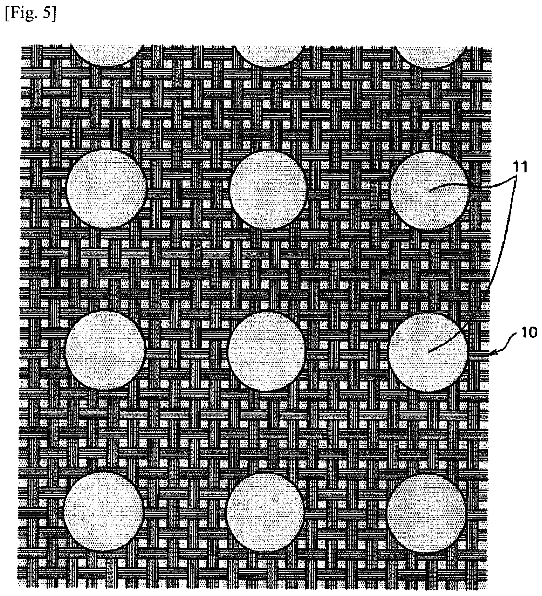

Incidentally, the reinforced fiber substrate 10 has various lengths. It is difficult to prepare a new binder permeable sheet 12 and new first to fourth frame members 13a to 13d in accordance with the sizes of the binder permeable sheet 12 and the frame body 13. As described above, for example, in a case in which it is intended to coat the powdery binder 11 on the entire surface of the long reinforced fiber substrate 10 illustrated in Fig. 4 in a dot shape by using the same devices as the binder permeable sheet 12 and the frame body 13 illustrated in Fig. 1, the devices can be applied by dividing the region to be coated with the binder 11 of the reinforced fiber substrate 10 into two or more regions and conducting the coating operation described above for each divided region as illustrated in the same figure. Fig. 5 is a plan view of a surface coated with the binder which illustrates an enlarged part of the reinforced fiber substrate 10 in which the binder 11 is coated on the surface coated with the binder in a dot shape.

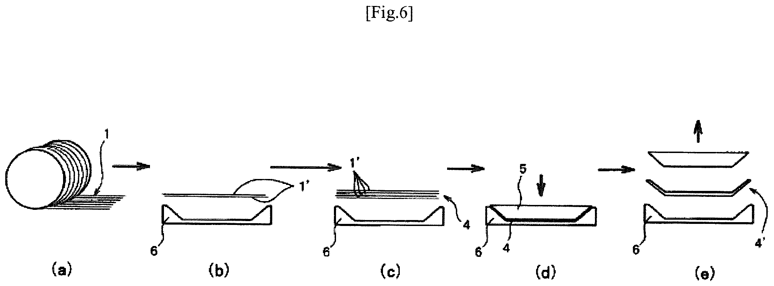

As can be understood from the above description, according to the coating operation of the powdery binder on the reinforced fiber substrate 10, any of the coated shape, size, or disposition of the powdery binder is uniform, for example, there is no large variation in the shape of the dot-shaped binder, and the dot interval is also uniform, and the flow path for the matrix resin is thus secured for the subsequent molding of FRP as well. A laminate in which a plurality of reinforced fiber substrates 10 coated with the powdery binder 11 in a dot shape in this manner are put one on top of another such that the surface coated with the binder thereof face the same direction as illustrated in Fig. 6 is placed on the lower mold 6 of the preform forming mold, the heated upper mold 5 and lower mold 6 are clamped and pressurized, or the laminate is heated by infrared rays or using an oven or the like and clamped and pressurized, and thus a part of the fibers constituting the laminate is joined to each other as the binder 11 is melted, and at the same time, a preform (shaping fabric) is formed as shaping is conducted by the upper mold 5 and the lower mold 6. In the case of heating and clamping the mold, it is possible to take out the preform in a state of maintaining the shape of preform by cooling the mold to a temperature equal to or lower than the binder solidifying temperature as it is after the laminate is shaped. In the case of heating the laminate, the mold is cooled after shaping and the shape of preform is maintained by setting the temperature of the mold to a temperature equal to or lower than the binder solidifying temperature and sandwiching the laminate between the molds.

In the invention, the powdery binder is not sprayed or flowed down from the required height to the surface of the substrate by using a nozzle or a spray as in the prior art, and thus the surrounding environment is not deteriorated by scattering of the binder and coating of the binder is also not affected by the surrounding environment. In other words, the method for manufacturing a reinforced fiber substrate according to the invention is carried out by using significantly simple tools of only the frame body 13 in which the binder permeable sheet 12 is stretched in a tension state and the spatula 14 as described above. In order to coat the powdery binder 11 on the reinforced fiber substrate 10, a determined amount of the powdery binder 11 can be accurately coated on the reinforced fiber substrate 10 in a dot shape at a predetermined interval in a predetermined pattern by simple operation of moving the spatula 14 while pressing it against the binder permeable sheet 12.

In addition, fixing can be conducted by infrared heating or the like immediately after coating of the binder and before lamination in order to improve the handleability of the reinforced fiber substrate after being coated with the binder. In the invention, automation is easy since simple tools are used, it is possible not only to carry out a step of coating a binder on a reinforced fiber substrate cut into a predetermined shape but also to continuously coat a binder and to fix it by infrared heating or the like during the manufacturing process of the reinforced fiber substrate, and it is also possible to coat and fix a binder in separate steps by using a roll-shaped reinforced fiber substrate as a raw fabric.

Here, it is possible to reliably retain the form as a preform when the amount of the binder 11 coated per one dot shape by adjusting the pressing force to the binder permeable sheet 12 by the spatula 14 or the aperture ratio of the binder permeable sheet 12 as described above, and further, it is possible to precisely control the bonding strength of the binder in the reinforced fiber substrate 10 by adjusting the disposed density of the binder permeable holes 15 constituting the pattern of the binder permeable sheet 12, and it is possible to locally enhance the shape retaining force of, for example, even a preform in a complicated form.

According to the invention, it is possible to coat the powdery binder 11 particularly as the pattern and thus to easily and reliably adjust the increase or decrease in amount of the powdery binder 11 coated at a specific location of the reinforced fiber substrate 10. In addition, the coating operation of the powdery binder 11 depends on the movement of the spatula 14 along the surface, and it is thus possible to suppress film formation by the powdery binder 11 in the nonporous region by adjusting the pressing force of the spatula and the flow of the matrix resin in the thickness direction of the laminated reinforced fiber substrate 10 in the RTM method is smooth.

### EXAMPLES

Hereinafter, the invention will be specifically described with reference to Examples.

### (Example 1)

A screen having apertures with φ of 6.2 mm, a pitch of 10 mm, and square array was used in order to coat a powder binder (Epikote 05390 manufactured by Hexion) on a carbon fiber non-crimp fabric (TKI300B127T, average diameter of carbon fiber: about 7 µm, manufactured by TK Industries GmbH).

The screen was placed on and brought into close contact with the non-crimp fabric, the binder was stored at one side edge portion on the screen, the powder binder was transferred to the non-crimp fabric through the apertures of the screen by a screen printing method in which the stored binder was moved to opposite side by using a rubber spatula, and the screen was removed, thereby coating the binder.

Furthermore, the binder was fixed by irradiating the binder with infrared rays to melt it and then cooling it, thereby obtaining a reinforced fiber substrate having an area ratio of the dot-shaped binder having a sieve diameter of from 5.7 to 6.3 mm of 26% and an area ratio of a fine dot-shaped binder having a projected area equivalent circle diameter of from 1.5 to 1.8 mm of 1.0% (3.7% with respect to the total area of the thermally fusible binders).

In addition, a plurality of these reinforced fiber substrates were prepared and laminated such that the binder-fixed sides thereof faced the same surface, then sandwiched between the shaping molds, and heated and pressurized to obtain a shaping fabric. This shaping fabric had sufficient interlayer bonding strength and exhibited excellent shape stability.

### (Comparative Example 1)

A reinforced fiber substrate having a ratio of the total area of the binders to the area of the non-crimp fabric of 27% was manufactured under the same conditions as in Example 1 except that the powder binder was sprayed on the non-crimp fabric without carrying out the screen printing method.

In this reinforced fiber substrate, the area ratio of fine dots having a projected area equivalent circle diameter of from 0.9 to 1.7 mm to the reinforced fiber substrate was 12.6% (46.7% with respect to the total area of the thermally fusible binders).

In addition, a plurality of these reinforced fiber substrates were prepared and laminated such that the binder-fixed sides thereof faced the same surface, then sandwiched between the shaping molds, and heated and pressurized to obtain a shaping fabric, but this shaping fabric was inferior in shape stability.

### EXPLANATIONS OF LETTERS OR NUMERALS

1 Reinforced fiber substrate
1' Two sheets of reinforced fiber substrate laminates (after coating of binder)
4 Large number of reinforced fiber substrate laminates (after coating of binder)
5 Upper mold
6 Lower mold
10 Reinforced fiber substrate (cut)
11 Powdery binder
12 Binder permeable sheet
13 Frame body
13a to 13d First to fourth frame members
14 Spatula
15 Binder permeable hole

## Claims

1. A method for manufacturing a reinforced fiber substrate having a thermally fusible binder disposed on a surface thereof in a predetermined pattern,
the method comprising:
a step of disposing a binder permeable sheet (12) via a frame body (13) on a reinforced fiber substrate (10);
wherein the binder permeable sheet (12) is a mesh fabric woven by using a monofilament or spun yarn made of a synthetic resin;
wherein the binder permeable sheet (12) has a permeable pattern of binder permeable holes (15) in a dot shape;
wherein the permeable pattern is formed by coating a coating agent on the entire surface of the mesh fabric excluding the dot-shaped binder permeable hole (15) forming part and removing a part of the coating agent to form the binder permeable holes; and
wherein the frame body is composed of frame members (13a to 13d);
and
a step of coating a powdery binder (11) on the surface of the reinforced fiber substrate (10) by placing the powder binder (11) as one lump in a partial region of the binder permeable sheet (12) in the vicinity of a first frame member (13a) of the frame body (13), and the moving a spatula (14) along the frame body (13) while pressing the spatula (14) against the binder permeable sheet (12) so as to permeate the powdery binder (11) through the permeable pattern.

2. The method for manufacturing a reinforced fiber substrate according to claim 1, further comprising a step of fusing the coated powdery binder onto a reinforced fiber substrate.

3. The method for manufacturing a reinforced fiber substrate according to claim 1 or 2, wherein a sieve diameter of the thermally fusible binder of the dot shape is 300 times or more the average diameter of the reinforcing fibers (10) and 3000 times or less the average diameter of the reinforcing fibers (10).

4. The method for manufacturing a reinforced fiber substrate according to any one of claims 1 to 3, wherein the same patterns of a thermally fusible binder is repeatedly disposed on the reinforced fiber substrate (10) by continuously using the binder permeable sheet.

5. The method for manufacturing a reinforced fiber substrate according to any one of claims 1 to 4, wherein an amount of a binder coated is controlled by the pressing force.

6. A method for manufacturing a shaping fabric, the method comprising:
the method for manufacturing a reinforced fiber substrate according to claims 1 to 5;
a step of laminating a plurality of said reinforced fiber substrates obtained by the manufacturing method according to any one of claims 1 to 5 such that binder-disposed surfaces of the reinforced fiber substrates face the same surface; and
a step of shaping each reinforced fiber substrate and at the same time fusing a binder by sandwiching a plurality of laminated reinforced fiber substrates between two or more shaping molds and heating and pressurizing the laminated and sandwiched reinforced fiber substrates.

7. A method for manufacturing a fiber-reinforced plastic structure comprising the method for manufacturing a shaping fabric according to claim 6, and wherein a matrix resin is impregnated into and cured in the shaping fabric.

## Patentansprüche

1. Verfahren zur Herstellung eines verstärkten Fasersubstrats mit einem thermisch schmelzbaren Bindemittel, das auf einer Oberfläche davon in einem vorbestimmten Muster angeordnet ist,
wobei das Verfahren umfasst:
einen Schritt, bei dem eine bindemitteldurchlässige Schicht (12) über einen Rahmenkörper (13) auf einem verstärkten Fasersubstrat (10) angeordnet wird;
wobei die bindemitteldurchlässige Schicht (12) ein Netzgewebe ist, das unter Verwendung eines aus einem synthetischen Harz hergestellten Monofilaments oder gesponnenen Garns gewebt ist;
wobei die bindemitteldurchlässige Schicht (12) ein durchlässiges Muster von bindemitteldurchlässigen Löchern (15) in Punktform aufweist;
wobei das durchlässige Muster gebildet wird durch Beschichten der gesamten Oberfläche des Netzgewebes mit Ausnahme des punktförmigen bindemitteldurchlässigen Lochs (15) mit einem Beschichtungsmittel, dadurch einen Teil bildend, und Entfernen eines Teils des Beschichtungsmittels, um die bindemitteldurchlässigen Löcher zu bilden; und
wobei der Rahmenkörper aus Rahmenelementen (13a bis 13d) zusammengesetzt ist;
und
einen Schritt, bei dem die Oberfläche des verstärkten Fasersubstrats (10) mit einem pulverförmigen Bindemittel (11) beschichtet wird durch Anordnen des pulverförmigen Bindemittels (11) als einen Klumpen in einem Teilbereich der bindemitteldurchlässigen Schicht (12) in der Nähe eines ersten Rahmenelements (13a) des Rahmenkörpers (13) und durch Bewegen eines Spatels (14) entlang des Rahmenkörpers (13), während der Spatel (14) gegen die bindemitteldurchlässige Schicht (12) gepresst wird, so dass das pulverförmige Bindemittel (11) durch das durchlässige Muster durchdringt.

2. Verfahren zur Herstellung eines verstärkten Fasersubstrats gemäß Anspruch 1, ferner umfassend einen Schritt, bei dem das beschichtete pulverförmige Bindemittel auf ein verstärktes Fasersubstrat geschmolzen wird.

3. Verfahren zur Herstellung eines verstärkten Fasersubstrats gemäß Anspruch 1 oder 2, wobei ein Siebdurchmesser des thermisch schmelzbaren punkteförmigen Bindemittels das 300-fache oder mehr des mittleren Verstärkungsfaserdurchmessers (10) und das 3000-fache oder weniger des mittleren Verstärkungsfaserdurchmessers (10) beträgt.

4. Verfahren zur Herstellung eines verstärkten Fasersubstrats gemäß mindestens einem der Ansprüche 1 bis 3, wobei die gleichen Muster eines thermisch schmelzbaren Bindemittels durch kontinuierliche Verwendung der bindemitteldurchlässigen Schicht wiederholt auf dem verstärkten Fasersubstrat (10) angeordnet werden.

5. Verfahren zur Herstellung eines verstärkten Fasersubstrats gemäß mindestens einem der Ansprüche 1 bis 4, wobei eine Menge eines beschichteten Bindemittels durch die Presskraft gesteuert wird.

6. Verfahren zur Herstellung eines Formgewebes, wobei das Verfahren umfasst:
das Verfahren zur Herstellung eines verstärkten Fasersubstrats gemäß mindestens einem der Ansprüche 1 bis 5;
einen Schritt, bei dem eine Vielzahl der verstärkten Fasersubstrate, die durch das Herstellungsverfahren gemäß mindestens einem der Ansprüche 1 bis 5 erhalten wurden, laminiert werden, so dass die mit Bindemittel beschichteten Oberflächen der verstärkten Fasersubstrate derselben Oberfläche zugewandt sind; und
einen Schritt, bei dem jedes verstärkte Fasersubstrat geformt wird und gleichzeitig ein Bindemittel durch sandwichartiges Anordnen einer Vielzahl von laminierten, verstärkten Fasersubstraten zwischen zwei oder mehreren Formwerkzeugen verschmolzen wird und das laminierte und sandwichartig angeordnete, verstärkte Fasersubstrat erhitzt und unter Druck gesetzt wird.

7. Verfahren zur Herstellung einer faserverstärkten Kunststoffstruktur, umfassend das Verfahren zur Herstellung eines Formgewebes gemäß Anspruch 6, wobei ein Matrixharz in das Formgewebe imprägniert und darin gehärtet wird.

## Revendications

1. Procédé de fabrication d'un substrat de fibres renforcé présentant un liant thermofusible disposé sur une surface de celui-ci en un motif prédéterminé,
le procédé comprenant :
une étape de disposition d'une feuille perméable au liant (12) via un corps de cadre (13) sur un substrat de fibres renforcé (10) ;
dans lequel la feuille perméable au liant (12) est un tissu à ouvertures tissé à l'aide d'un fil monofilament ou d'un filé faits d'une résine synthétique ;
dans lequel la feuille perméable au liant (12) présente un motif perméable de trous perméables au liant (15) en forme de points ;
dans lequel le motif perméable est formé par revêtement d'un agent de revêtement sur la surface tout entière du tissu à ouvertures à l'exclusion de la partie de formation de trous perméables au liant (15) en forme de points et retrait d'une partie de l'agent de revêtement pour former les trous perméables au liant ; et
dans lequel le corps de cadre est composé d'éléments de cadre (13a à 13d) ;
et
une étape de revêtement d'un liant en poudre (11) sur la surface du substrat de fibres renforcé (10) par placement du liant en poudre (11) comme un bloc dans une région partielle de la feuille perméable au liant (12) à proximité d'un premier élément de cadre (13a) du corps de cadre (13), et déplacement d'une spatule (14) le long du corps de cadre (13) tout en pressant la spatule (14) contre la feuille perméable au liant (12) de façon à faire pénétrer le liant en poudre (11) à travers le motif perméable.

2. Procédé de fabrication d'un substrat de fibres renforcé selon la revendication 1, comprenant en outre une étape de fusion du liant en poudre revêtu sur un substrat de fibres renforcé.

3. Procédé de fabrication d'un substrat de fibres renforcé selon la revendication 1 ou 2, dans lequel un diamètre de tamis du liant thermofusible de la forme de point est de 300 fois ou plus le diamètre moyen des fibres de renforcement (10) et de 3 000 fois ou moins le diamètre moyen des fibres de renforcement (10).

4. Procédé de fabrication d'un substrat de fibres renforcé selon l'une quelconque des revendications 1 à 3, dans lequel le même motif d'un liant thermofusible est disposé de manière répétée sur le substrat de fibres renforcé (10) par utilisation de manière continue de la feuille perméable au liant.

5. Procédé de fabrication d'un substrat de fibres renforcé selon l'une quelconque des revendications 1 à 4, dans lequel une quantité d'un liant revêtu est régulée par la force de pression.

6. Procédé de fabrication d'un tissu de mise en forme, le procédé comprenant :
le procédé de fabrication d'un substrat de fibres renforcé selon les revendications 1 à 5 ;
une étape de stratification d'une pluralité desdits substrats de fibres renforcés obtenus par le procédé de fabrication selon l'une quelconque des revendications 1 à 5 de telle sorte que des surfaces à liant disposé des substrats de fibres renforcés fassent face à la même surface ; et
une étape de mise en forme de chaque substrat de fibres renforcé et en même temps de fusion d'un liant par coincement d'une pluralité de substrats de fibres renforcés stratifiés entre deux moules de mise en forme ou plus et chauffage et mise sous pression des substrats de fibres renforcés stratifiés et coincés.

7. Procédé de fabrication d'une structure en plastique renforcé de fibres comprenant le procédé de fabrication d'un tissu de mise en forme selon la revendication 6, et dans lequel une résine matricielle est imprégnée dans et durcie dans le tissu de mise en forme.
